# FASCICULE DE BREVET EUROPEEN

(11) **EP 2 499 013 B1**
(45) Date de publication et mention de la délivrance du brevet: **04.12.2013**
(21) Numéro de dépôt: 10785477.0
(22) Date de dépôt: 18.10.2010
(51) Int. Cl.: B60L 11/18, H01M 2/10, B60S 5/06

(54) **DISPOSITIF POUR LE REMPLACEMENT D'UNE BATTERIE D'ALIMENTATION D'UN MOTEUR D'ENTRAINEMENT D'UN VEHICULE AUTOMOBILE**
VORRICHTUNG ZUM AUSWECHSELN EINER BATTERIE ZUM VERSORGEN EINER ANTRIEBSMOTORS EINES KRAFTFAHRZEUGES
DEVICE FOR THE EXCHANGE OF A SUPPLY BATTERY FOR THE DRIVE MOTOR OF A MOTOR VEHICLE

(30) Priorité: 12.11.2009 FR 0957957
(43) Date de publication de la demande: 19.09.2012
(73) Titulaire: Renault S.A.S., 92100 Boulogne-Billancourt (FR)
(72) Inventeur: MULATO, Gilles, F-92320 Chatillon (FR)
(86) Numéro de dépôt international: PCT/FR2010/052211
(87) Numéro de publication internationale: WO 2011/058256

(56) Documents cités:
- DE-A1-102007 032 210
- FR-A1- 2 335 961
- US-A- 5 612 606
- US-A1- 2006 214 634
- US-A1- 2007 113 921

## Description

La présente invention se rapporte à un dispositif d'actionnement pour le verrouillage et/ou déverrouillage d'un conteneur d'énergie de type batterie d'un véhicule automobile électrique. Par la suite, le terme batterie sera utilisé pour une raison de simplification. L'invention porte aussi sur un système de remplacement d'une batterie ou de tout conteneur d'énergie d'un véhicule automobile incluant un tel dispositif d'actionnement ainsi que sur une station de remplacement de batterie utilisant un tel système. Enfin, elle porte sur un procédé de remplacement d'un conteneur d'énergie utilisant un tel dispositif d'actionnement.

Certains véhicules automobiles, comme les véhicules électriques ou hybrides, comprennent une batterie pour l'alimentation d'un moteur d'entraînement électrique. Il peut se révéler intéressant d'échanger cette batterie lorsque son niveau d'énergie est faible contre une nouvelle batterie chargée. Ceci peut être fait dans une station similaire à une station service dans laquelle on peut remplir un réservoir d'essence d'un véhicule automobile.

On connaît du document US 5 612 606, qui divulgue toutes les caractéristiques du préambule de la revendication 1, une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs.

Une difficulté pour la mise en place d'un tel concept d'échange de batteries réside dans le fait qu'il existe une multitude de véhicules automobiles pouvant comprendre des batteries de type différent, fixées de manière différente sur le véhicule automobile. Or il n'est pas envisageable économiquement de multiplier les dispositifs automatiques de dépose et remplacement de ces différents types de batteries ni de mettre en place une solution manuelle en raison de son coût et du poids des batteries.

Ainsi, pour rendre possible un déploiement aisé des stations d'échange de batteries (nécessitant peu de compétence technologique), il est nécessaire de rendre fiable, robuste, flexible et universel le fonctionnement de ces stations.

Ainsi, le but de l'invention est de fournir une solution de remplacement de batterie atteignant les objectifs mentionnés ci-dessus.

Le concept de l'invention repose sur un dispositif universel et standard comprenant des outils participant à l'actionnement des mécanismes de verrouillage et/ou déverrouillage d'une batterie montée sur un véhicule automobile, que nous appellerons par sa dénomination anglo-saxonne « toolbox » pour une raison de simplification de la description.

Plus précisément, l'invention repose sur un dispositif toolbox pour l'actionnement du verrouillage et/ou déverrouillage d'une batterie d'alimentation d'un moteur d'entraînement d'un véhicule automobile, caractérisé en ce qu'il comprend un boîtier support, un système de transmission de mouvement comprenant au moins une boîte de renvoi et au moins un axe de transmission, relié a au moins un système de préhension d'un mécanisme de verrouillage/déverrouillage de la batterie.

Le dispositif toolbox peut comprendre au moins un moteur et une interface pour sa connexion électrique.

Le dispositif toolbox peut comprendre au moins une interface pour une liaison avec un moteur externe permettant la transmission de mouvement depuis le moteur externe jusqu'au au moins un système de préhension.

L'interface pour une liaison avec un moteur externe peut comprendre un boîtier de raccordement et une boîte de renvoi interne.

Le dispositif toolbox peut comprendre une interface pour sa manipulation.

Le dispositif toolbox peut comprendre deux moteurs.

Le dispositif toolbox peut comprendre quatre systèmes de préhension disposés dans les coins du boîtier support sensiblement rectangulaire, le au moins un moteur se trouvant dans une zone centrale du boîtier support.

De plus le boîtier support dudit dispositif toolbox peut avantageusement comporter une cavité destinée à s'emboîter dans une tête de rotule d'un système de levage dudit dispositif toolbox. Ainsi le dispositif toolbox est monté mobile en rotation sur le système de levage et peut venir se positionner dans un plan parallèle au plan inférieur de la batterie à remplacer, ce qui facilite la bonne préhension de verrous de la batterie par les systèmes de préhension du dispositif toolbox.

L'invention porte aussi sur un système de remplacement d'une batterie d'un véhicule automobile, caractérisé en ce qu'il comprend un dispositif toolbox tel que décrit précédemment et un dispositif de levage de ce dispositif toolbox, permettant son déplacement vertical.

Le dispositif de levage peut en outre comprend un système de déplacement qui comprend un moyen de déplacement horizontal sur rail afin d'amener le dispositif toolbox sous la batterie d'un véhicule automobile, ledit dispositif de levage comprenant un moyen de déplacement vertical du dispositif toolbox afin de l'amener en contact avec la batterie pour son déverrouillage.

Le dispositif de levage peut être un robot et le dispositif toolbox peut comprendre une poignée pour sa manipulation par le robot.

Avantageusement, ledit système de levage peut comporter une tête de rotule destinée à mettre en référence ledit dispositif toolbox par rapport à ladite batterie.

Le système de remplacement d'une batterie d'un véhicule automobile peut comprendre des barres de portage de la voiture associées au dispositif toolbox pour améliorer la stabilité et la précision du positionnement contre le véhicule automobile pour la mise en oeuvre du verrouillage et déverrouillage de sa batterie.

L'invention porte aussi sur une station de remplacement d'une batterie d'alimentation d'un moteur d'entraînement d'un véhicule automobile, caractérisée en ce qu'elle comprend un système de remplacement d'une batterie d'un véhicule automobile tel que décrit ci-dessus.

L'invention porte aussi sur un procédé de remplacement d'une batterie d'un véhicule automobile, caractérisé en ce qu'il comprend les étapes suivantes :
- positionnement d'un dispositif toolbox tel que décrit précédemment sous la batterie d'un véhicule automobile ;
- levage vertical du dispositif toolbox jusqu'à sa connexion avec la batterie ;
- actionnement du dispositif toolbox pour déverrouiller la batterie du véhicule automobile ;
- abaissement du dispositif toolbox portant la batterie déverrouillée ;
- évacuation de la batterie déverrouillée.

Avantageusement, ladite étape d'actionnement du dispositif toolbox est précédée d'une étape de rotation dudit dispositif toolbox, positionnant ledit boîtier support dans un plan parallèle au plan inférieur de ladite batterie.

Le procédé de remplacement d'une batterie d'un véhicule automobile peut comprendre les étapes supplémentaires suivantes :
- positionnement d'un dispositif toolbox portant une batterie sous le véhicule automobile ;
- levage vertical du dispositif toolbox jusqu'au positionnement de la batterie dans son logement prévu au sein du véhicule automobile ;
- actionnement du dispositif toolbox pour verrouiller la batterie sur le véhicule automobile ;
- évacuation du dispositif toolbox.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente en perspective une toolbox selon un mode d'exécution de l'invention.
La figure 2 représente en vue de dessus la toolbox selon le mode d'exécution de l'invention.
La figure 3 représente en perspective des détails de la toolbox selon le mode d'exécution de l'invention.
La figure 4 représente en vue de dessus une variante d'exécution de la toolbox de l'invention.
La figure 5 représente en perspective la liaison entre une toolbox selon le mode d'exécution de l'invention et une batterie d'un véhicule automobile.
La figure 6 représente schématiquement en coupe de côté le principe de l'exploitation d'une toolbox selon le mode d'exécution de l'invention au sein d'un système de verrouillage et déverrouillage d'une batterie d'un véhicule automobile.
Les figures 7 à 10 représentent schématiquement différentes phases d'un procédé de déverrouillage d'une batterie d'un véhicule automobile utilisant la toolbox selon le mode d'exécution de l'invention.

Le concept de l'invention repose sur un dispositif dit « toolbox », qui comprend un certain nombre de composants standards et modulaires afin d'obtenir un dispositif adapté pour une intervention sur tous types de batteries et tous véhicules automobiles.

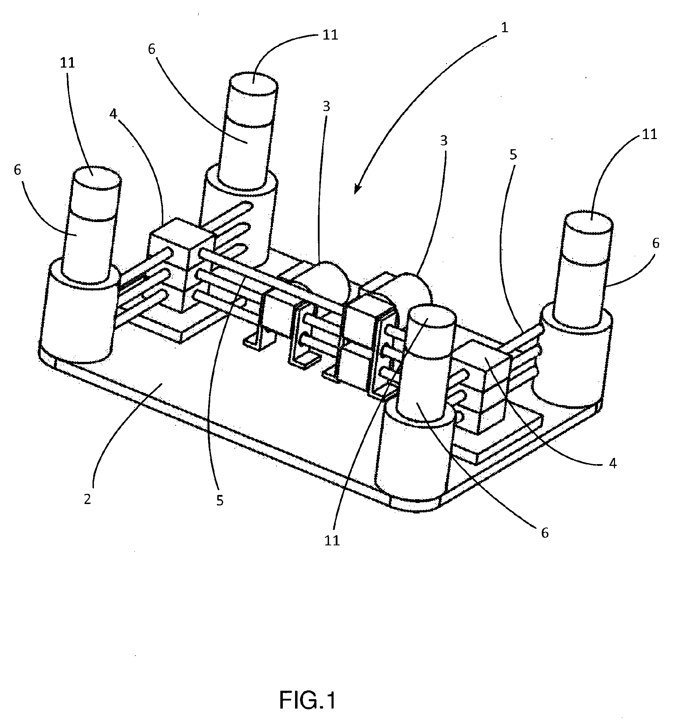

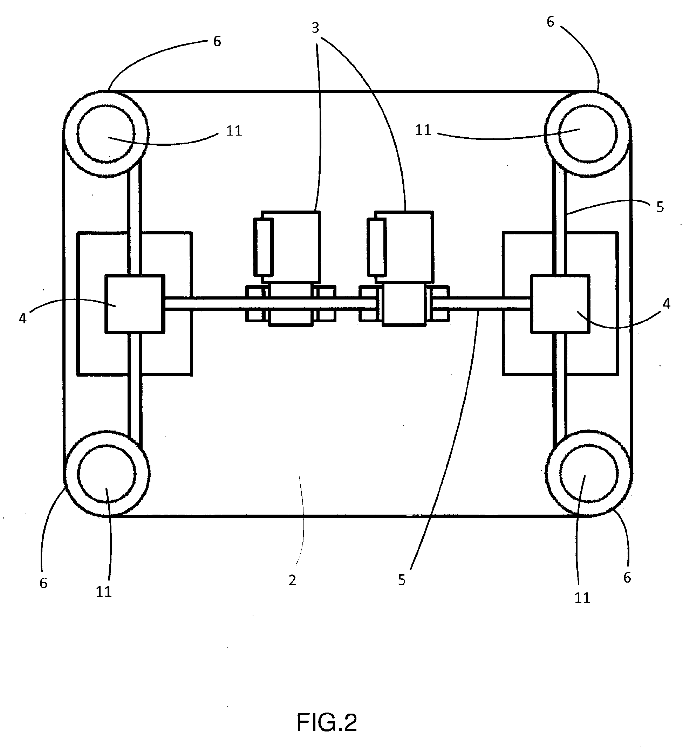

Les figures 1 et 2 représentent une toolbox 1 selon un mode d'exécution de l'invention. Ce dispositif d'outils d'actionnement ou toolbox 1 comprend une boîte support 2, dont la fonction est de supporter les différents composants du dispositif, deux moteurs 3 simples et standards, disposés dans une zone centrale du boîtier support 2, des boîtes de renvoi 4 et des axes de transmission 5, pouvant comprendre des systèmes de décalage angulaire tels que des cardans. La fonction des boites de renvoi 4 et des axes de transmission 5 est de transmettre un mouvement d'entraînement induit par les moteurs 3 à quatre systèmes de préhension 6 des mécanismes de verrouillage positionnés aux quatre coins de la boîte support 2 de forme sensiblement rectangulaire, dont la fonction est d'actionner les mécanismes de verrouillage et déverrouillage d'une batterie. Ces systèmes de préhension 6 se présentent sous une forme cylindrique, s'étendant au-dessus de la surface supérieure du boîtier support 2, afin de permettre à ses extrémités supérieures 11 de venir en liaison avec les verrous d'une batterie. Enfin, le dispositif comprend une connexion électrique pour l'alimentation des moteurs, ainsi qu'une interface pour la préhension de la toolbox, afin de permettre à un dispositif la manipulation de la toolbox pour la positionner correctement contre un véhicule automobile et pouvoir obtenir le verrouillage et le déverrouillage de sa batterie, comme cela sera explicité plus loin.

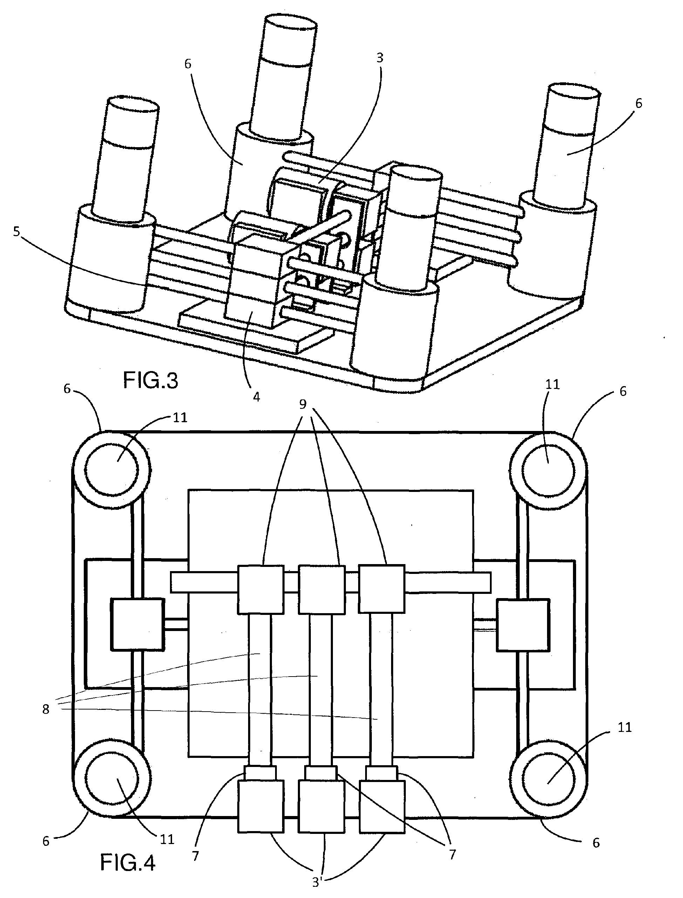

La figure 3 représente une perspective en plus gros plan de la toolbox permettant de bien distinguer ses deux moteurs 3, des boîtes de renvoi 4, des taxes de transmission 5 et des systèmes de préhension 6 des mécanismes.

La figure 4 représente une variante de réalisation de la toolbox selon l'invention dans laquelle trois moteurs 3' sont positionnés à l'extérieur de la toolbox. Cette dernière est alors équipée d'une interface permettant la transmission du mouvement induit par ces moteurs externes 3' jusqu'aux systèmes de préhension 6. Cette interface consiste en des boîtiers de raccordement 7, des axes de transmissions 8 vers des boîtes de renvoi internes 9.

Bien entendu, l'invention ne se limite pas aux modes d'exécution décrit ci-dessus. Notamment, la toolbox 1 peut comprendre un nombre différent de moteurs 3, de préférence entre trois à six moteurs. En général, ce nombre de moteurs est directement lié au nombre de mouvements à effectuer pour mettre en oeuvre le verrouillage et le déverrouillage d'une batterie. En effet, un moteur permettra de réaliser un seul type de mouvement choisi parmi une translation ou une rotation par exemple. Ainsi, dans le cas où le verrouillage nécessite deux types de mouvements, il faudra prévoir deux moteurs, dans le cas où trois types de mouvements sont requis, trois moteurs, etc.

Ainsi, la solution présente l'avantage d'être relativement indépendante du nombre de verrous à actionner. En effet, le nombre de moteurs correspond au nombre de mouvements à réaliser, comme cela a été vu auparavant, et des toolbox avec un même nombre de moteurs sont adaptées pour l'actionnement de mécanismes de verrouillage de batteries avec des nombres différents de verrous. Toutefois, en cas de nécessité d'augmentation de la puissance disponible sur la toolbox, il est possible d'augmenter le nombre de moteurs plutôt que d'utiliser des moteurs plus puissants, de prévoir par exemple deux moteurs complémentaires par mouvement à réaliser. Ainsi, la toolbox représentée est bien adaptée pour l'actionnement de 4 à 8 verrous.

De même, le nombre de boîtes de renvoi et d'axes de transmission de mouvement est variable et dépend du nombre de moteurs et du nombre d'actionneurs. De plus, le nombre de systèmes de préhension sera aussi en accord avec le nombre de verrous prévus pour le maintien de la batterie d'un véhicule automobile.

Finalement, la structure précise de la toolbox en termes de nombre de moteurs, de mécanismes de transmission de mouvement, et de systèmes de préhension dépendra en fait du mécanisme de verrouillage de la batterie sur le véhicule automobile.

Ainsi, la solution présente les avantages suivants :
- elle est adaptée pour une standardisation du fait de sa grande flexibilité par l'utilisation de composants simples et standards adaptés pour une multitude de mouvements différents, et de son coût réduit ;
- elle est adaptée pour une implémentation dans une station-service d'échange de batteries car elle représente un système à interface standard et encombrement optimisé ;
- elle est adaptée à la constitution d'un réseau de stations-services d'échange de batterie universelles qui peuvent être adaptées au type de véhicules pris en charge.

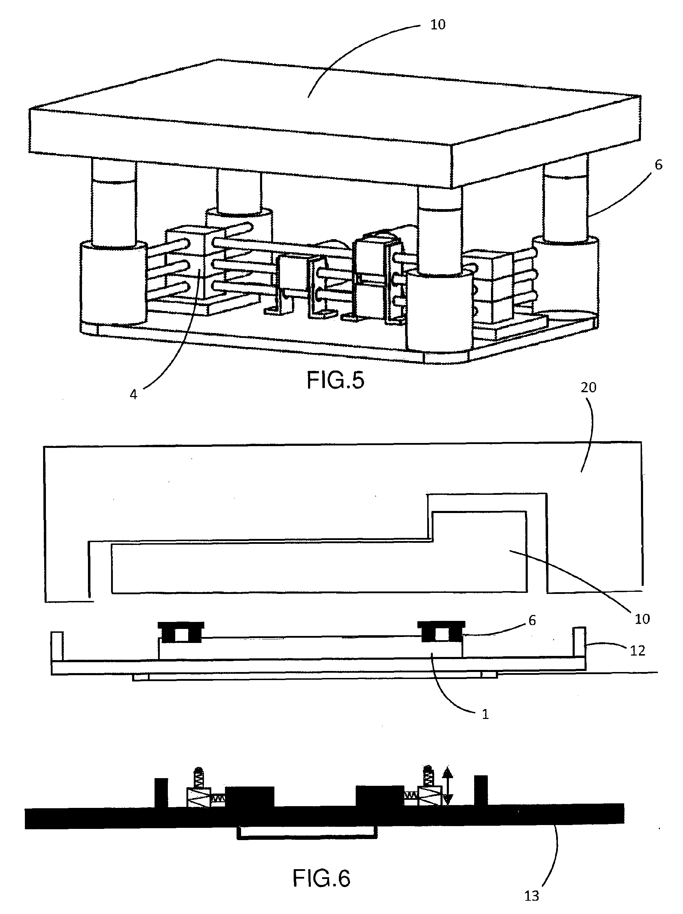

La figure 5 représente la connexion d'une toolbox selon le mode d'exécution de l'invention avec une batterie 10. Il apparaît que les quatre systèmes de préhension 6 viennent en connexion dans leur partie supérieure 11 avec des moyens correspondants aménagés au niveau des verrous de la batterie. L'actionnement de ces systèmes de préhension 6 permet d'agir sur ces verrous de la batterie 10, pour les verrouiller ou les déverrouiller.

La figure 6 illustre schématiquement l'utilisation d'une toolbox 1 selon le mode d'exécution de l'invention au sein d'un système de déverrouillage d'une batterie 10 fixée sous un véhicule automobile 20. La toolbox 1 comprend des systèmes de préhension 6 débordant dans sa partie supérieure et pouvant venir agir sur les verrous de la batterie 10, comme cela a été explicité ci-dessus. Un système de déplacement et de levage 13 de la toolbox 1 est aménagé au niveau de la station d'échange. Selon une variante de réalisation, on peut prévoir un système de levage non pourvu de fonction de déplacement et uniquement limité à une fonction de levage. La fonction de déplacement sera alors obtenu par un système de déplacement distinct pouvant soit déplacer la batterie à monter soit le véhicule sur laquelle on souhaite monter la batterie. Dans le mode de réalisation présenté à la figure 6, ce système de levage 13 a pour fonction de transporter la toolbox au bon endroit sous le véhicule automobile en vis-à-vis de la batterie puis de la déplacer dans la direction verticale pour sa mise en contact ou non avec la batterie. Des barres de portage 12 de la voiture, optionnelles, sont ajoutées à la toolbox pour améliorer la stabilité et la précision du positionnement de l'ensemble. La toolbox est déplacée dans cette réalisation par un dispositif de type rouleaux fonctionnant à l'aide de rails de convoyage. En variante, un robot peut être utilisé pour le déplacement d'une toolbox, cette dernière comprenant alors une interface de liaison par exemple en forme de poignées de préhension.

En variante, le système de levage 13 comporte de plus sur sa surface supérieure un plateau au centre duquel une tête de rotule motorisée s'interface avec le dispositif toolbox 1, celui-ci présentant au centre de son boîtier support 2 une cavité complémentaire s'emboîtant sur cette tête de rotule. D'autres éléments mécaniques de liaison sur le plateau du système de levage 13 et sur la surface inférieure du boîtier support 2 peuvent éventuellement permettre une mise en référence plus précise du dispositif toolbox 1 sur le système de levage 13. Dans cette variante, la tête de rotule motorisée du système de levage 13 permet la mise en référence horizontale automatique de la toolbox 1 sous la batterie 10 du véhicule, après levage du dispositif toolbox 1 à l'altitude adéquate par le système de levage 13. Plus précisément, cette mise en référence horizontale consiste à amener la surface plane du boîtier support 2 du dispositif toolbox 1 dans un plan parallèle à celui de la surface inférieure de la batterie 10.

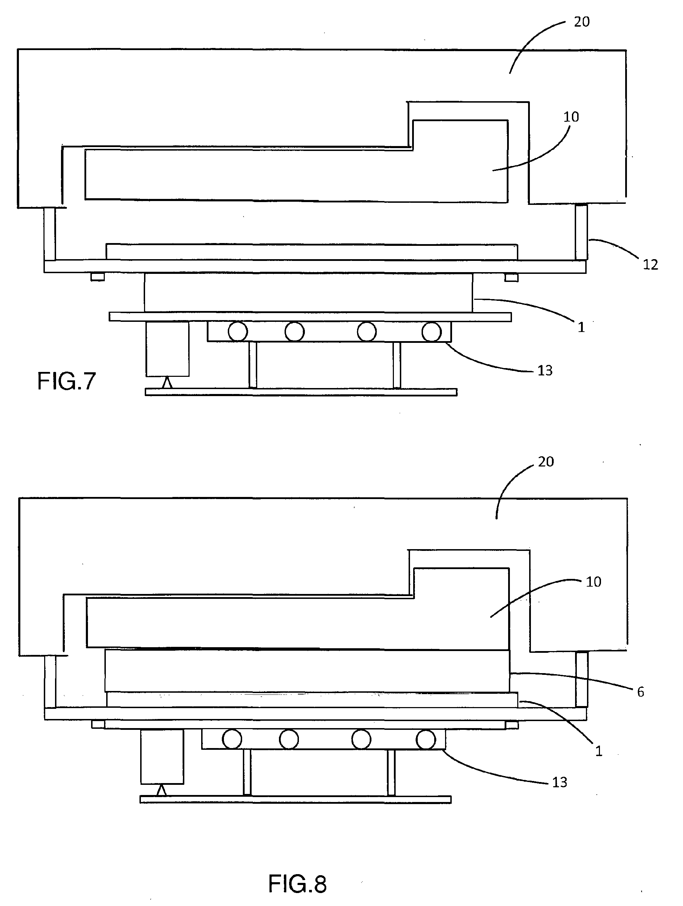

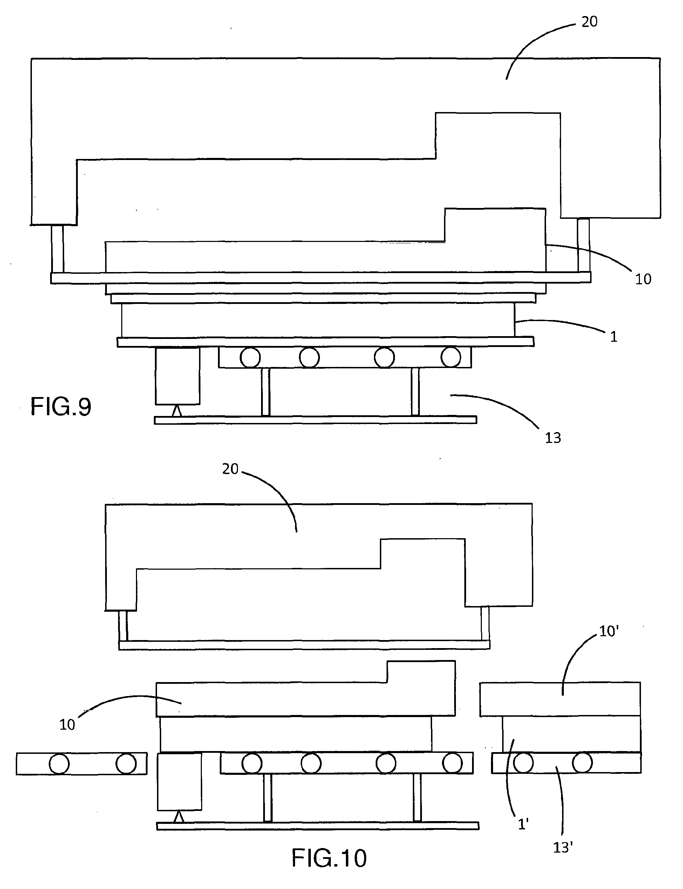

La figure 7 représente une phase initiale d'un procédé de déverrouillage d'une batterie 10 d'un véhicule automobile 20. Le système de déplacement et levage 13 a positionné la toolbox 1 sous la batterie 10 du véhicule automobile 20. La figure 8 représente la phase suivante dans laquelle le système de levage 13 a déplacé vers le haut la toolbox 1, jusqu'à sa connexion avec la batterie 10, afin que ses actionneurs puissent la déverrouiller, selon le fonctionnement décrit auparavant. La figure 9 représente ainsi la batterie 10 déverrouillée du véhicule automobile, transportée hors du véhicule automobile par la toolbox 1, qui remplit ici une seconde fonction de maintien et transport de la batterie, qui s'ajoute à sa première fonction d'actionnement des mécanismes de verrouillage et déverrouillage. Enfin, la figure 10 représente le remplacement de la batterie vide par une nouvelle batterie chargée. Pour cela, le système de déplacement et levage 13 éloigne horizontalement la toolbox 1 portant la batterie 10 déchargée, par exemple par un déplacement sur des rails, alors qu'un autre système de levage 13' apporte sous le véhicule automobile une autre toolbox 1' portant une batterie 10' chargée, en vue de son positionnement et verrouillage dans son emplacement prévu sous le véhicule 20, de manière similaire et inverse aux étapes du procédé de déverrouillage décrites ci-dessus.

## Revendications

1. Dispositif toolbox (1) pour l'actionnement du verrouillage et/ou déverrouillage d'une batterie d'alimentation d'un moteur d'entraînement d'un véhicule automobile, **caractérisé en ce qu'**il comprend un boîtier support (2), un système de transmission de mouvement comprenant au moins une boîte de renvoi (4) et au moins un axe de transmission (5), relié a au moins un système de préhension (6) d'un mécanisme de verrouillage/déverrouillage de la batterie.

2. Dispositif toolbox (1) selon la revendication précédente, **caractérisé en ce qu'**il comprend au moins un moteur (3) et une interface pour sa connexion électrique.

3. Dispositif toolbox (1) selon la revendication 1, **caractérisé en ce qu'**il comprend au moins une interface pour une liaison avec un moteur externe (3') permettant la transmission de mouvement depuis le moteur externe jusqu'au au moins un système de préhension (6).

4. Dispositif toolbox (1) selon la revendication précédente, **caractérisé en ce que** l'interface pour une liaison avec un moteur externe (3') comprend un boîtier de raccordement (7) et une boîte de renvoi interne (9).

5. Dispositif toolbox (1) selon l'une des revendications précédentes, **caractérisé en ce qu'**il comprend une interface pour sa manipulation.

6. Dispositif toolbox (1) selon l'une des revendications précédentes, **caractérisé en ce qu'**il comprend deux moteurs (3).

7. Dispositif toolbox (1) selon la revendication 2, **caractérisé en ce qu'**il comprend quatre systèmes de préhension (6) disposés dans les coins du boîtier support (2) sensiblement rectangulaire, le au moins un moteur (3) se trouvant dans une zone centrale du boîtier support (2).

8. Dispositif toolbox (1) selon l'une quelconque des revendications précédentes, **caractérisé en ce que** ledit boîtier support (2) comporte une cavité destinée à s'emboîter dans une tête de rotule d'un système de levage (13) dudit dispositif toolbox (1).

9. Système de remplacement d'une batterie d'un véhicule automobile, **caractérisé en ce qu'**il comprend un dispositif toolbox (1) selon l'une des revendications précédentes et un dispositif de levage (13) de ce dispositif toolbox (1), permettant son déplacement vertical.

10. Système de remplacement d'une batterie d'un véhicule automobile selon la revendication précédente, **caractérisé en ce que** le dispositif de levage (13) comprend en outre un système de déplacement qui comprend un moyen de déplacement horizontal sur rail afin d'amener le dispositif toolbox (1) sous la batterie (10) d'un véhicule automobile (20), ledit dispositif de levage comprenant un moyen de déplacement vertical du dispositif toolbox (1) afin de l'amener en contact avec la batterie (10) pour son déverrouillage.

11. Système de remplacement d'une batterie d'un véhicule automobile selon la revendication précédente, **caractérisé en ce que** le dispositif de levage (13) est un robot et **en ce que** le dispositif toolbox (1) comprend une poignée pour sa manipulation par le robot.

12. Système de remplacement d'une batterie d'un véhicule automobile selon l'une des revendications 9 à 11, **caractérisé en ce qu'**il comprend des barres de portage (12) de la voiture associées au dispositif toolbox (1) pour améliorer la stabilité et la précision du positionnement contre le véhicule automobile pour la mise en oeuvre du verrouillage et déverrouillage de sa batterie.

13. Système de remplacement selon l'une quelconque des revendications 9 à 12, **caractérisé en ce que** ledit système de levage (13) comporte une tête de rotule destinée à mettre en référence ledit dispositif toolbox (1) par rapport à ladite batterie (10).

14. Station de remplacement d'une batterie d'alimentation d'un moteur d'entraînement d'un véhicule automobile, **caractérisée en ce qu'**elle comprend un système de remplacement d'une batterie d'un véhicule automobile selon l'une des revendications 9 à 13.

15. Procédé de remplacement d'une batterie d'un véhicule automobile, **caractérisé en ce qu'**il comprend les étapes suivantes :
- positionnement d'un dispositif toolbox (1) selon l'une des revendications 1 à 7 sous la batterie (10) d'un véhicule automobile ;
- levage vertical du dispositif toolbox jusqu'à sa connexion avec la batterie ;
- actionnement du dispositif toolbox pour déverrouiller la batterie du véhicule automobile;
- abaissement du dispositif toolbox portant la batterie déverrouillée ;
- évacuation de la batterie (10) déverrouillée.

16. Procédé de remplacement d'une batterie selon la revendication 15, **caractérisé en ce que** ladite étape d'actionnement du dispositif toolbox (1) est précédée d'une étape de rotation dudit dispositif toolbox (1), positionnant ledit boîtier support (2) dans un plan parallèle au plan inférieur de ladite batterie.

17. Procédé de remplacement d'une batterie d'un véhicule automobile selon la revendication 15 ou 16, **caractérisé en ce qu'**il comprend les étapes supplémentaires suivantes :
- positionnement d'un dispositif toolbox portant une batterie (10') sous le véhicule automobile ;
- levage vertical du dispositif toolbox jusqu'au positionnement de la batterie dans son logement prévu au sein du véhicule automobile ;
- actionnement du dispositif toolbox pour verrouiller la batterie sur le véhicule automobile ;
- évacuation du dispositif toolbox.

## Patentansprüche

1. Toolbox-Vorrichtung (1) zum Betätigen der Verriegelung und/oder Entriegelung einer Batterie zum Versorgen eines Antriebsmotors eines Kraftfahrzeugs, **dadurch gekennzeichnet, dass** sie ein Traggehäuse (2), ein Bewegungsübertragungssystem, das mindestens ein Getriebe (4) und mindestens eine Übertragungsachse (5), die mit mindestens einem Greifsystem (6) eines Verriegelungs-/Entriegelungsmechanismus der Batterie verbunden ist, aufweist.

2. Toolbox-Vorrichtung (1) nach dem vorhergehenden Anspruch, **dadurch gekennzeichnet, dass** sie mindestens einen Motor (3) und eine Schnittstelle für sein elektrisches Anschließen aufweist.

3. Toolbox-Vorrichtung (1) nach Anspruch 1, **dadurch gekennzeichnet, dass** sie mindestens eine Schnittstelle für eine Verbindung mit einem externen Motor (3'), die die Bewegungsübertragung von dem externen Motor bis zu dem mindestens einen Greifsystem (6) erlaubt, aufweist.

4. Toolbox-Vorrichtung (1) nach dem vorhergehenden Anspruch, **dadurch gekennzeichnet, dass** die Schnittstelle für eine Verbindung mit einem externen Motor (3') ein Anschlussgehäuse (7) und ein internes Getriebe (9) aufweist.

5. Toolbox-Vorrichtung (1) nach einem der vorhergehenden Ansprüche, **dadurch gekennzeichnet, dass** sie eine Schnittstelle für ihre Betätigung aufweist.

6. Toolbox-Vorrichtung (1) nach einem der vorhergehenden Ansprüche, **dadurch gekennzeichnet, dass** sie zwei Motoren (3) aufweist.

7. Toolbox-Vorrichtung (1) nach Anspruch 2, **dadurch gekennzeichnet, dass** sie vier Greifsysteme (6) aufweist, die in den Ecken des Traggehäuses (2), das im Wesentlichen rechteckig ist, angeordnet sind, wobei sich der mindestens eine Motor (3) in einem zentralen Bereich des Traggehäuses (2) befindet.

8. Toolbox-Vorrichtung (1) nach einem der vorhergehenden Ansprüche, **dadurch gekennzeichnet, dass** das Traggehäuse (2) einen Hohlraum aufweist, der dazu bestimmt ist, sich in einem Kugelkopf eines Hubsystems (13) der Toolbox-Vorrichtung (1) zu verschachteln.

9. System zum Auswechseln einer Batterie eines Kraftfahrzeugs, **dadurch gekennzeichnet, dass** es eine Toolbox-Vorrichtung (1) nach einem der vorhergehenden Ansprüche und eine Hubvorrichtung (13) dieser Toolbox-Vorrichtung (1), die ihr vertikales Verlagern erlaubt, aufweist.

10. System zum Auswechseln einer Batterie eines Kraftfahrzeugs nach dem vorhergehenden Anspruch, **dadurch gekennzeichnet, dass** die Hubvorrichtung (13) außerdem ein Verlagerungssystem aufweist, das ein Mittel zum horizontalen Verlagern auf Schiene aufweist, um die Toolbox-Vorrichtung (1) unter die Batterie (10) eines Kraftfahrzeugs (20) zu bringen, wobei die Hubvorrichtung ein vertikales Verlagerungsmittel der Toolbox-Vorrichtung (1) aufweist, um sie mit der Batterie (10) zu ihrem Entriegeln in Berührung zu bringen.

11. System zum Auswechseln einer Batterie eines Kraftfahrzeugs nach dem vorhergehenden Anspruch, **dadurch gekennzeichnet, dass** die Hubvorrichtung (13) ein Roboter ist, und dass die Toolbox-Vorrichtung (1) einen Griff zu ihrem Handhaben durch den Roboter aufweist.

12. System zum Auswechseln einer Batterie eines Kraftfahrzeugs nach einem der Ansprüche 9 bis 11, **dadurch gekennzeichnet, dass** es Tragstangen (12) des Fahrzeugs verbunden mit der Toolbox-Vorrichtung (1) aufweist, um die Standfestigkeit und die Präzision der Positionierung gegen das Kraftfahrzeug für das Umsetzen des Verriegelns und Entriegelns seiner Batterie zu verbessern.

13. System zum Auswechseln nach einem der Ansprüche 9 bis 12, **dadurch gekennzeichnet, dass** das Hubsystem (13) einen Kugelkopf aufweist, der dazu bestimmt ist, die Toolbox-Vorrichtung (1) in Bezug zu der Batterie (10) zu positionieren.

14. Station zum Auswechseln einer Batterie zur Versorgung eines Antriebsmotors eines Kraftfahrzeugs, **dadurch gekennzeichnet, dass** sie ein System zum Auswechseln einer Batterie eines Kraftfahrzeugs nach einem der Ansprüche 9 bis 13 aufweist.

15. Verfahren zum Auswechseln einer Batterie eines Kraftfahrzeugs, **dadurch gekennzeichnet, dass** es die folgenden Schritte aufweist:
- Positionieren einer Toolbox-Vorrichtung (1) nach einem der Ansprüche 1 bis 7, unter der Batterie (10) eines Kraftfahrzeugs;
- vertikales Heben der Toolbox-Vorrichtung bis zu ihrer Verbindung mit der Batterie;
- Betätigen der Toolbox-Vorrichtung, um die Batterie des Kraftfahrzeugs zu entriegeln;
- Senken der Toolbox-Vorrichtung, die die entriegelte Batterie trägt;
- Entfernen der entriegelten Batterie (10).

16. Verfahren zum Auswechseln einer Batterie nach Anspruch 15, **dadurch gekennzeichnet, dass** dem Schritt des Betätigens der Toolbox-Vorrichtung (1) ein Drehschritt der Toolbox-Vorrichtung (1) vorangeht, der das Traggehäuse (2) in einer Ebene parallel zu der unteren Ebene der Batterie positioniert.

17. Verfahren zum Auswechseln einer Batterie eines Kraftfahrzeugs nach Anspruch 15 oder 16, **dadurch gekennzeichnet, dass** es die folgenden zusätzlichen Schritte aufweist:
- Positionieren einer Toolbox-Vorrichtung, die eine Batterie (10') trägt, unter dem Kraftfahrzeug;
- vertikales Heben der Toolbox-Vorrichtung bis zum Positionieren der Batterie in ihrer vorgesehenen Aufnahme innerhalb des Kraftfahrzeugs;
- Betätigen der Toolbox-Vorrichtung zum Verriegeln der Batterie auf dem Kraftfahrzeug;
- Entfernen der Toolbox-Vorrichtung.

## Claims

1. Toolbox device (1) for enacting the locking and/or unlocking of a battery that powers a motor that drives a motor vehicle, **characterized in that** it comprises a support unit (2), a movement transmission system comprising at least one relay gearbox (4) and at least one transmission shaft (5), connected to at least one battery locking/unlocking mechanism grasping system (6).

2. Toolbox device (1) according to the preceding claim, **characterized in that** it comprises at least one motor (3) and an interface for the electrical connection thereof.

3. Toolbox device (1) according to Claim 1, **characterized in that** it comprises at least one interface for connection with an external motor (3') so that movement can be transmitted from the external motor to at least one grasping system (6).

4. Toolbox device (1) according to the preceding claim, **characterized in that** the interface for connection with an external motor (3') comprises a connecting unit (7) and an internal relay gearbox (9).

5. Toolbox device (1) according to one of the preceding claims, **characterized in that** it comprises an interface for handling it.

6. Toolbox device (1) according to one of the preceding claims, **characterized in that** it comprises two motors (3).

7. Toolbox device (1) according to Claim 2, **characterized in that** it comprises four grasping systems (6) positioned in the corners of the substantially rectangular support unit (2), the at least one motor (3) being positioned in a central region of the support unit (2).

8. Toolbox device (1) according to any one of the preceding claims, **characterized in that** said support unit (2) comprises a cavity intended to fit into a ball end of a lifting system (13) for lifting said toolbox device (1).

9. System for replacing a battery of a motor vehicle, **characterized in that** it comprises a toolbox device (1) according to one of the preceding claims and a lifting device (13) for lifting this toolbox device (1), allowing it to be moved vertically.

10. System for replacing a battery of a motor vehicle according to the preceding claim, **characterized in that** the lifting device (13) further comprises a movement system which comprises a means for moving horizontally along a rail in order to bring the toolbox device (1) under the battery (10) of a motor vehicle (20), said lifting device comprising a means for moving the toolbox device (1) vertically in order to bring it into contact with the battery (10) in order to unlock it.

11. System for replacing a battery of a motor vehicle according to the preceding claim, **characterized in that** the lifting device (13) is a robot and **in that** the toolbox device (1) comprises a handle via which the robot can handle it.

12. System for replacing a battery of a motor vehicle according to one of Claims 9 to 11, **characterized in that** it comprises car bearer bars (12) associated with the toolbox device (1) to improve the stability and precision of the positioning against the motor vehicle in order to carry out the locking and unlocking of the battery thereof.

13. Replacement system according to any one of Claims 9 to 12, **characterized in that** said lifting system (13) comprises a ball end intended to reference said toolbox device (1) with respect to said battery (10).

14. Station for replacing a battery that powers a motor that drives a motor vehicle, **characterized in that** it comprises a system for replacing a battery of a motor vehicle according to one of Claims 9 to 13.

15. Method for replacing a battery of a motor vehicle, **characterized in that** it comprises the following steps:
- positioning a toolbox device (1) according to one of Claims 1 to 7 under the battery (10) of a motor vehicle;
- lifting the toolbox device vertically until it connects with the battery;
- actuating the toolbox device in order to unlock the battery from the motor vehicle;
- lowering the toolbox device bearing the unlocked battery;
- taking the unlocked battery (10) away.

16. Method for replacing a battery according to Claim 15, **characterized in that** said step of actuating the toolbox device (1) is preceded by a step of rotating said toolbox device (1), positioning said support unit (2) in a plane parallel to the bottom plane of said battery.

17. Method for replacing a battery of a motor vehicle according to Claim 15 or 16, **characterized in that** it comprises the following additional steps:
- positioning a toolbox device bearing a battery (10') under the motor vehicle;
- lifting the toolbox device vertically until the battery is positioned in its housing provided within the motor vehicle;
- actuating the toolbox device to lock the battery to the motor vehicle;
- taking the toolbox device away.
